# EUROPÄISCHE PATENTSCHRIFT

(11) **EP 1 449 796 B1**
(45) Veröffentlichungstag und Bekanntmachung des Hinweises auf die Patenterteilung: **04.01.2006**
(21) Anmeldenummer: 04001147.0
(22) Anmeldetag: 21.01.2004
(51) Int. Cl.: B65G 49/04, B05C 3/10

(54) **Anlage zum Behandeln, insbesondere zum Lackieren, von Gegenständen, insbesondere von Fahrzeugkarosserien**
Installation for treating, especially painting, objects, especially vehicle bodies
Installation de traitement, notamment pour la peinture d'objets, notamment de carrosseries de véhicules

(30) Priorität: 24.02.2003 DE 10308034
(43) Veröffentlichungstag der Anmeldung: 25.08.2004
(73) Patentinhaber: EISENMANN Maschinenbau GmbH & Co. KG, 71032 Böblingen (DE)
(72) Erfinder: Ehrenleitner, Franz, 70439 Stuttgart (DE)
(74) Vertreter: Ostertag, Ulrich

(56) Entgegenhaltungen:
- EP-A- 1 221 420
- DE-U- 20 105 676

## Beschreibung

Die Erfindung betrifft eine Anlage zum Behandeln, insbesondere zum Lackieren, von Gegenständen, insbesondere von Fahrzeugkarosserien, mit
a) mindestens einem Behandlungsbereich, insbesondere einem eine Behandlungsflüssigkeit enthaltenden Bad, in welchen die Gegenstände eingebracht werden;
b) einer Fördereinrichtung, mit welcher die Gegenstände in einer kontinuierlichen oder intermittierenden Translationsbewegung durch die Anlage geführt werden können und die mindestens einen Transportwagen umfasst, der seinerseits aufweist:
   ba) ein Fahrwerk;
   bb) mindestens einen Schwenkarm, der um eine erste Schwenkachse verschwenkbar mit dem Fahrwerk verbunden ist und mit dem um eine zweite Schwenkachse verschwenkbar eine erste Stelle einer Tragstruktur für den zu behandelnden Gegenstand verbunden ist.

   Eine derartige Anlage ist aus der DE 201 05 676 U bekannt. Bei dieser wird jeder Gegenstand bwz. eine Mehrzahl von Gegenständen von einem einzigen Transportwagen befördert, der in allen seinen Bewegungsfreiheitsgraden völlig unabhängig von eventuell weiteren in derselben Anlagen vorhandenen Transportwagen gesteuert werden kann. Mit Hilfe der über den Schwenkarm verlaufenden doppelt gelenkigen Verbindung zwischen dem Fahrwerk und dem zu behandelnden Gegenstand und unter zu Hilfenahme der Translationsbewegung lassen sich unterschiedlichste Kinematiken für eine Ein- und Ausbringbewegung des Gegenstandes bzw. der Gegenstände erzielen. Diese Anlage arbeitet hervorragend und besitzt eine außergewöhnliche Flexibilität. Für sehr große zu lackierende Gegenstände, insbesondere für Karosserien von kleineren oder größeren Lastkraftwagen, ist jedoch die Aufnahme des Gewichts durch einen einzigen Transportwagen und die Aufnahme der Drehmomente, die bei den verschiedenen Schwenkbewegungen entstehen, nur noch mit aufwändigen Maßnahmen bewältigbar.
   Aufgabe der vorliegenden Erfindung ist es daher, eine Anlage der eingangs genannten Art zu schaffen, mit welcher bei vergleichbarer Flexibilität auch sehr große Gegenstände behandelt werden können.
   Diese Aufgabe wird erfindungsgemäß dadurch gelöst, dass
c) jedem Transportwagen ein zweiter Transportwagen zugeordnet ist, der ebenfalls umfasst:
   ca) ein Fahrwerk;
   cb) mindestens einen Schwenkarm, der um eine erste Schwenkachse verschwenkbar mit dem Fahrwerk verbunden ist und mit dem über eine zweite Schwenkachse verschwenkbar eine zweite Stelle der Tragstruktur verbunden ist;

   derart, dass
d) das Paar aus zwei Transportwagen die folgenden sechs Bewegungsfreiheitsgrade aufweist:
   - Translationsbewegung des ersten Transportwagens;
   - Translationsbewegung des zweiten Transportwagens;
   - Schwenkung des Schwenkarmes des ersten Transportwagens um dessen erste Schwenkachse;
   - Schwenkung des Schwenkarmes des zweiten Transportwagens um dessen erste Schwenkachse;
   - Schwenkung der Tragstruktur um die zweite Schwenkachse des ersten Transportwagens;
   - Schwenkung der Tragstruktur um die zweite Schwenkachse des zweiten Transportwagens;

   wobei
e) für mindestens drei der oben genannten Bewegungsfreiheitsgrade Antriebe vorgesehen sind, von denen mindestens einer ein Translationsantrieb ist.

Erfindungsgemäß werden also zwei Transportwagen, deren Bauweise im Wesentlichen derjenigen beim Stande der Technik entspricht, zu Paaren zusammengekoppelt. Die Paare als Einheit sind gegenüber den anderen Paaren von Transportwagen im System ähnlich unabhängig voneinander, wie dies die einzelnen Transportwagen beim Gegenstand der DE 201 05 676 U der Fall war. Dies bedeutet insbesondere, dass die Translationsbewegungen der verschiedenen Paare von Transportwagen ebenso wie die Bewegungskinematiken, mit denen die daran befestigten Gegenstände in den Behandlungsbereich eingebracht werden, vollständig unabhängig voneinander durch individuelle Steuerungen der einzelnen Transportwagen und/oder der Paare von Transportwagen und/oder eine Anlagensteuerung gesteuert werden können. Innerhalb der Paare von Transportwagen jedoch erfolgt die Betätigung der verschiedenen Freiheitsgrade korreliert. Dabei müssen mindestens drei Freiheitsgrade durch einen aktiven Antrieb kontrolliert gesteuert werden; die anderen Freiheitsgrade folgen im Allgemeinen automatisch auf Grund der wechselseitigen Verbindungen zwischen den beiden Transportwagen und der Tragstruktur.

Unter geometrisch ungünstigen Bedingungen und in ganz bestimmten Winkelstellungen der Schwenkarme im Transportwagenpaar kann es vorkommen, dass eine Selbsthemmung oder eine Undefiniertheit des Bewegungsablaufes auftritt, wenn nur für drei Bewegungsfreiheitsgrade Antriebe vorhanden sind. Es kann sich daher im Einzelfall empfehlen, für vier Bewegungsfreiheitsgrade Antriebe vorzusehen, wobei mindestens ein Antrieb von einer Steuerung kompatibel zu den Antrieben der anderen Bewegungsfreiheitsgrade angesteuert wird. Letztere Erfordernis ergibt sich daraus, dass ja an und für sich bereits drei Antriebe den grundsätzlichen Bewegungsablauf innerhalb des Paares von Transportwagen festlegen und der vierte Antrieb, der nur im Falle einer Selbsthemmung oder einer Undefiniertheit des Bewegungsablaufes eingreifen muss, der durch die drei anderen Antriebe vorgegebenen Kinematik nicht entgegenwirken darf.

Grundsätzlich können beide Transportwagen im Paar einen Translationsantrieb aufweisen. Diese werden dann beide so angesteuert, dass sich eine gewünschte mittlere Bewegungsgeschwindigkeit beider Transportwagen im Paar und gleichzeitig ein gewünschter Abstand zwischen den beiden Transportwagen einstellen.

Alternativ kommt eine Ausgestaltung der Erfindung in Frage, bei welcher ein Transportwagen im Paar einen Translationsantrieb aufweist und ein Antrieb vorgesehen ist, mit dem der Abstand zwischen den beiden Transportwagen im Paar veränderbar ist. Bei dieser Ausführungsform gibt der für den ersten Transportwagen vorgesehene Translationsantrieb den "Grundvorschub" des Paares vor, während mit Hilfe des zweiten Antriebes die Bewegungsgeschwindigkeit des zweiten Transportwagens gegenüber derjenigen des ersten Transportwagens im Paar so variiert wird, dass sich jeweils zwischen den Transportwagen der Abstand einstellt, der entsprechend der gewünschten Kinematik erforderlich ist.

Der den Abstand verändernde Antrieb kann ein Spindelantrieb sein.

Steuerungstechnisch besonders günstig ist es, wenn alle Antriebe für alle Bewegungsfreiheitsgrade an einem Transportwagen des Paares angeordnet sind. In diesem Falle genügt es, nur diesen einen Transportwagen aktiv anzusteuern; elektrische Zuführungen zumindest für Kraftglieder zu dem zweiten Transportwagen sind nicht erforderlich.

Selbstverständlich ist es aber auch denkbar, je nach den Gegebenheiten die Antriebe für die Bewegungsfreiheitsgrade auf beide Transportwagen zu verteilen.

Fahrzeugkarosserien werden häufig in einem elektrophoretischen Tauchvorgang lackiert. Wird die erfindungsgemäße Anlage hier eingesetzt, ist eine Ausführungsform von besonderem Vorteil, bei welcher ein Transportwagen im Paar eine Verbindung zwischen dem einen Pol einer Spannungsquelle und dem zu lackierenden Gegenstand herstellt, während der andere Transportwagen eine Verbindung zwischen dem entgegengesetzten Pol einer Spannungsquelle und einer im Innenraum des zu lackierenden Gegenstandes mitgeführten Hilfselektrode herstellt. Gerade bei großen, hohlen Gegenständen wird die elektrophoretische Tauchlackierung der Innenflächen zunehmend schwieriger, da der Innenraum auf Grund der Wirkung des Gegenstandes als Faraday'scher Käfig weitgehend feldfrei bleibt. Um dem zu begegnen, kann in den Innenraum des zu lackierenden Gegenstandes eine Hilfselektrode eingebracht werden, der dann über einen der beiden Transportwagen die erforderliche Spannung zugeführt wird. Die Grundkonstruktion beider Transportwagen bleibt dabei dieselbe, wobei die Stromzuführung, die beim einen Transportwagen dazu genutzt wird, den Gegenstand selbst auf Abscheidepotenzial zu legen, beim anderen Transportwagen dafür eingesetzt wird, die Hilfselekrode auf Gegenpotenzial zu bringen.

Ausführungsbeispiele der Erfindung werden nachfolgend anhand der Zeichnung näher erläutert; es zeigen
- Figur 1: eine perspektivischen Auschnitt aus einer Tauchlackieranlage für große Fahrzeugkarosserien;
- Figur 2: in größerem Maßstab eine Seitenansicht eines Paars von Transportwagen, die in der Tauchlackieranlage der Figur 1 verwendet werden, mit aufgeladener Karosserie in normaler Transportposition;
- Figur 3: eine Ansicht, ähnlich der Figur 2, in der jedoch die Transportwagen etwas modifiziert sind;
- Figur 4: eine Ansicht, ähnlich den Figuren 2 und 3, in denen die Transportwagen eine erneute Modifikation erfahren haben;
- Figuren 5 bis 10: Phasenbilder einer ersten Bewegungskinematik, die in der Anlage der Figuren 1 bis 4 beim Ein- und Austauchen der Fahrzeugkarosserie realisiert werden kann;
- Figuren 11 bis 17: Phasenbilder einer zweiten Bewegungskinematik, die in der Anlage der Figuren 1 bis 4 beim Ein- und Austauchen der Fahrzeugkarosserie realisiert werden kann.

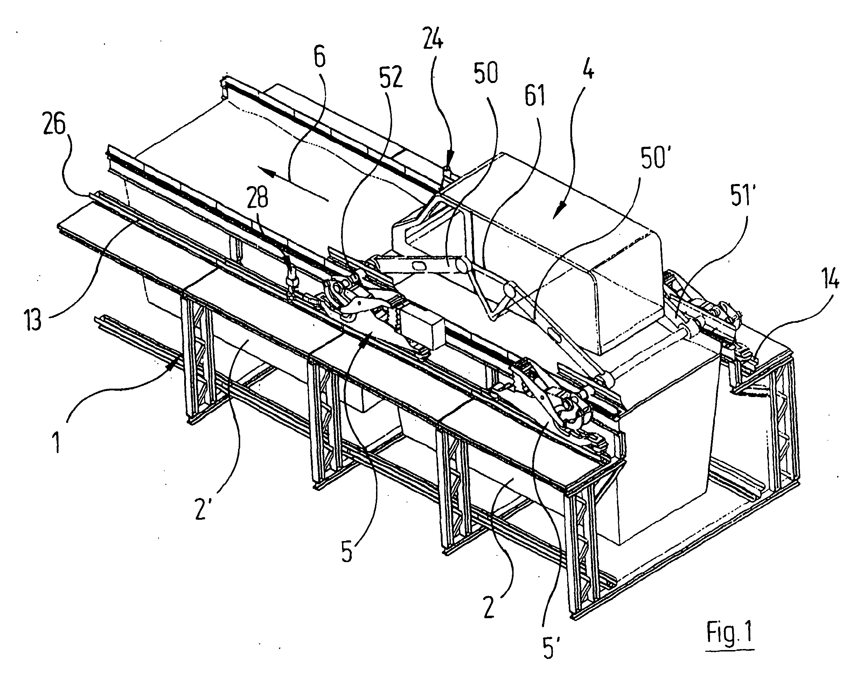

Zunächst wird auf Figur 1 Bezug genommen. Die hier dargestellte Tauchlackieranlage für große Fahrzeugkarosserien 4, im dargestellten Falle, diejenige eines Kleintransporters, umfasst eine eine Vielzahl von senkrechten Ständern und horizontalen Trägern aufweisende Stahlkonstruktion 1, in der zwei Badbehälter 2, 2' eingehängt sind. Die Badbehälter 2, 2' sind bis zu einem bestimmten Spiegel mit einer Behandlungsflüssigkeit, beispielsweise mit flüssigem Lack, gefüllt, in welche die Fahrzeugkarosserien 4 eingetaucht werden sollen. Diese Fahrzeugkarosserien 4 werden hierzu mit Hilfe von Paaren von Transportwagen 5, 5' in Richtung des Pfeiles 6 (vgl. Figur 1) transportiert, wobei die Translationsbewegung der Paare von Transportwagen 5, 5' insgesamt unabhängig voneinander erfolgen kann und im Zuge dieser unabhängigen Bewegungen Verlangsamungen, Beschleunigungen, Stopps und auch Bewegungsumkehrungen der Paare von Transportwagen 5, 5' möglich sind. Insgesamt erfolgt jedoch ein Transport der Fahrzeugkarosserien 4 in Richtung des Pfeiles 6 von Figur 1.

Die Translationsbewegungen der Transportwagen 5, 5' innerhalb eines Paares sind in nachfolgend näher beschriebener Weise koordiniert.

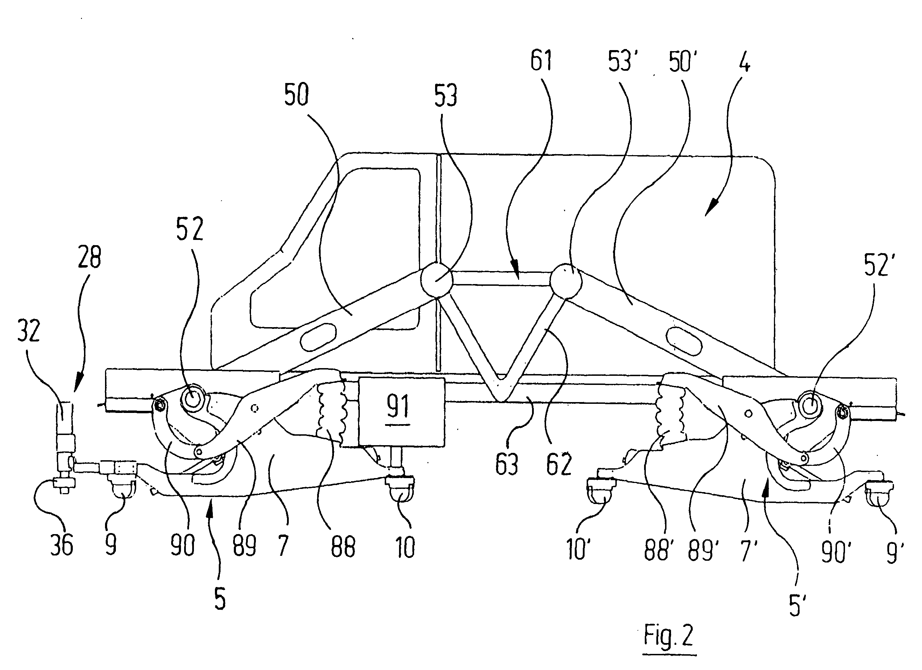

Alle Transportwagen 5, 5' sind, soweit nachfolgend nichts anderes gesagt ist, im Wesentlichen gleich ausgebildet. Ihre Beschreibung erfolgt daher nachfolgend an Hand des linken Transportwagens 5 in Figur 2. Die Bauweise entspricht weitgehend derjenigen, die aus der DE 201 05 676 U bekannt ist. Auf diese Druckschrift wird ergänzend zum Verständnis des Transportwagens 5 Bezug genommen.

Der Transportwagen 5 besitzt ein Fahrwerk mit zwei Längstraversen 7, von denen in Figur 2 nur die vordere erkennbar ist und an deren Unterseite jeweils zwei Räder 9, 10 um eine horizontale Achse drehbar gelagert sind. Zusätzlich sind die Räder 9, 10 jeweils mit Hilfe eines im Einzelnen nicht dargestellten Drehschemels um eine vertikale Achse verdrehbar, so dass die Ausrichtung der Räder 9, 10 gegenüber den jeweiligen Längstraversen 7 verändert werden kann.

Die Räder 9, 10 rollen auf zwei parallelen Laufflächen 13, 14 ab, die ihrerseits von dem Stahlbau 1 getragen sind. Die Laufflächen 13, 14 sind ebenso wie der Stahlbau 1 nur in Figur 1 dargestellt und in den nachfolgenden Figuren weggelassen, um diese zu entlasten.

Eine der Laufflächen 13, 14 ist in der in der DE 201 05 676 U beschriebenen Weise mit einer Führungsrippe versehen, welcher die Räder 9, 10 des Transportwagens 5 nachfolgen.

Der Transportwagen 5 besitzt eine Eintauchvorrichtung, die beidseits der Fahrzeugkarosserien 4 jeweils einen Schwenkarm 50, 51 umfasst. Dieser kann in einer vertikalen Ebene, die parallel zur Förderrichtung verläuft, um eine untere Schwenkachse 52, die in einer Längstraverse 7 gelagert ist, verschwenken. Diese Schwenkbewegung wird von einem in der Zeichnung nicht dargestellten Getriebemotor bewirkt.

An den äußeren Enden der Schwenkarme 50, 51 ist jeweils ein Achsstummel 53 schwenkbar gelagert, der mit Hilfe eines durch den Innenraum der hohlen Schwenkarme 50, 51 verlaufenden Antriebes von einem ebenfalls nicht dargestellten Getriebemotor aus in Drehung versetzt werden kann. Diese Achsstummel 53 sind starr an einer ersten Stelle mit einer Tragstruktur 61 für die Fahrzeugkarosserie 4 verbunden, die weiter unten noch näher erläutert wird.

Beim Gegenstand der oben erwähnten DE 201 05 676 wird das Drehmoment, das vom Gewicht der Fahrzeugkarosserie sowie der Tragstruktur auf die Schwenkarme des Transportwagens ausgeübt wird, durch Gegengewichte kompensiert, die an einer über die untere Schwenkachse hinausgehenden Verlängerung dieser Schwenkarme angebracht sind. Bei dem in der Zeichnung dargestellten Ausführungsbeispiel der Erfindung sind diese Gegengewichte durch eine balgartige Feder 88 ersetzt, die über mehrere Gelenkglieder 89, 90 so mit den Schwenkarmen 50, 51 verbunden ist, dass die balgartige Feder 88 durch das Gewicht der Fahrzeugkarosserie 4 und der Tragstruktur 61 komprimiert wird. Einzelheiten dieses Gewichtsausgleiches sind im vorliegenden Zusammenhang nicht von Interesse.

Die Räder 9, 10 des Transportwagens 5 sind selbst nicht angetrieben. Der Vorwärtstrieb des Transportwagens 5 erfolgt vielmehr über gesonderte Preßrollenantriebe 28, 29, wie sie in der DE 201 05 676 U beschrieben sind und die mit parallel zu den beiden Laufflächen 13, 14 verlaufenden, senkrecht ausgerichteten, stationären Antriebsflanschen 26, 27 zusammenwirken (vgl. Figur 1). Die Pressrollenantriebe 28, 29 umfassen jeweils einen elektrischen Antriebsmotor 32, der zwei Pressrollen 36, 37 antreibt, die von beiden Seiten her gegen den jeweils zugeordneten Antriebsflansch 26 bzw. 27 angepresst werden. Werden die Antriebsmotoren 32, 33 bestromt, laufen die Pressrollen 36, 37 auf den jeweiligen Seitenflächen der Antriebsflansche 36, 37 ab und bewegen dabei den Transportwagen 5 auf den Laufflächen 13, 14 vorwärts.

Der zweite Transportwagen 5' des in den Figuren 1 und 2 dargestellten Paares von Transportwagen 5, 5' ist bis auf nachfolgend geschilderte Unterschiede gleich wie der Transportwagen 5 aufgebaut. Elemente des Transportwagens 5' werden daher mit denselben Bezugszeichen wie beim Transportwagen 5, jedoch mit einem zugefügten ' gekennzeichnet. Auf eine Beschreibung des zweiten Transportwagens 5' wird, soweit Übereinstimmung herrscht, verzichtet.

Der Transportwagen 5' ist in dem Sinne gegensinnig zum Transportwagen 5 auf den Laufflächen 13, 14 aufgesetzt, dass die äußeren Enden der Schwenkarme 50, 51,_50', 51' aufeinander zuweisen. Der jeweils am äußeren Ende des Schwenkarmes 50' des Transportwagens 5' drehbar gelagerte, selbst eine Schwenkachse bildende Achsstummel 53 ist an einer zweiten Stelle der Tragstruktur 61 starr befestigt. Die Tragstruktur 61, auf welcher die Fahrzeugkarosserie 4 lösbar befestigt ist, umfasst hierzu beidseits der Fahrzeugkarosserie 4 jeweils einen dreieckigen Halterahmen 62, der an einem unten liegenden Eck mit einem Tragrahmen 63 starr verbunden ist, auf dem die Fahrzeugkarosserie 4 aufruht und der in der normalen, in den Figuren 1 und 2 dargestellten Transportposition horizontal verläuft. Die Befestigung der Achsstummel 53, 53' der beiden Transportwagen 5, 5' erfolgt im Bereich der oberen Eecken des Halterahmens 62.

Während, wie oben beschrieben, die Schwenkachsen 52, 53 des ersten Transportwagens 5 angetrieben sind und dieser erste Transportwagen 5 auch einen eigenen Translationsantrieb 28 besitzt, sind derartige Antriebe für die Schwenkachsen 52', 53' sowie für den Linearantrieb des zweiten Transportwagens 5' nicht vorgesehen. Sollen identische Transportwagen 5, 5' eingesetzt werden, werden die Antriebe des Transportwagens 5' abgekoppelt, so dass sich die Schwenkachsen 52', 53' des Transportwagens 5' frei in ihren Lagern drehen und der Transportwagen 5' frei verschoben werden kann.

Entsprechend besitzt nur der erste Tragwagen 5 eine eigene Steuerung, die in einem Steuerungskasten 91 mitgeführt wird.

Die Funktionsweise der oben beschriebenen Tauchlackieranlage ist wie folgt:

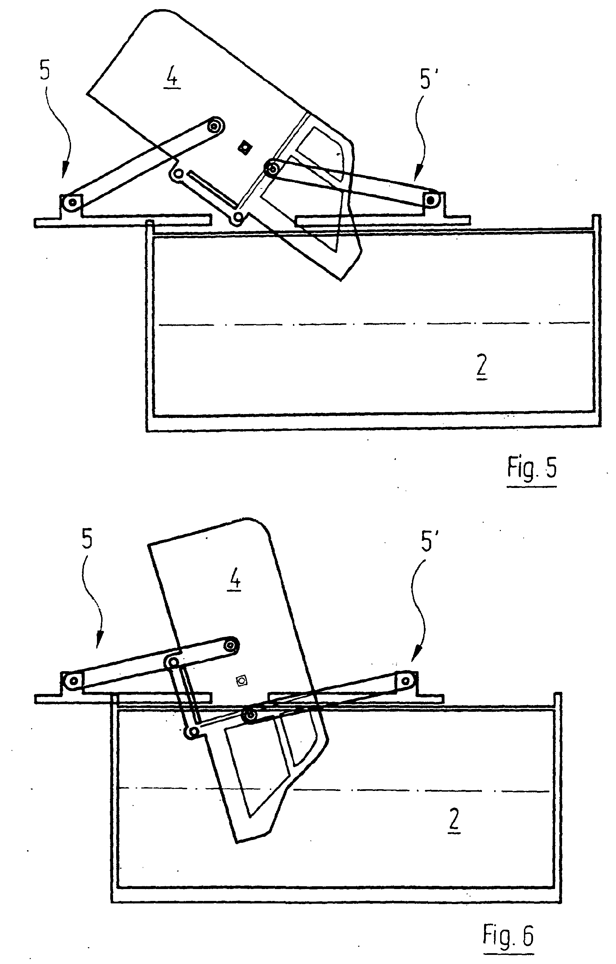

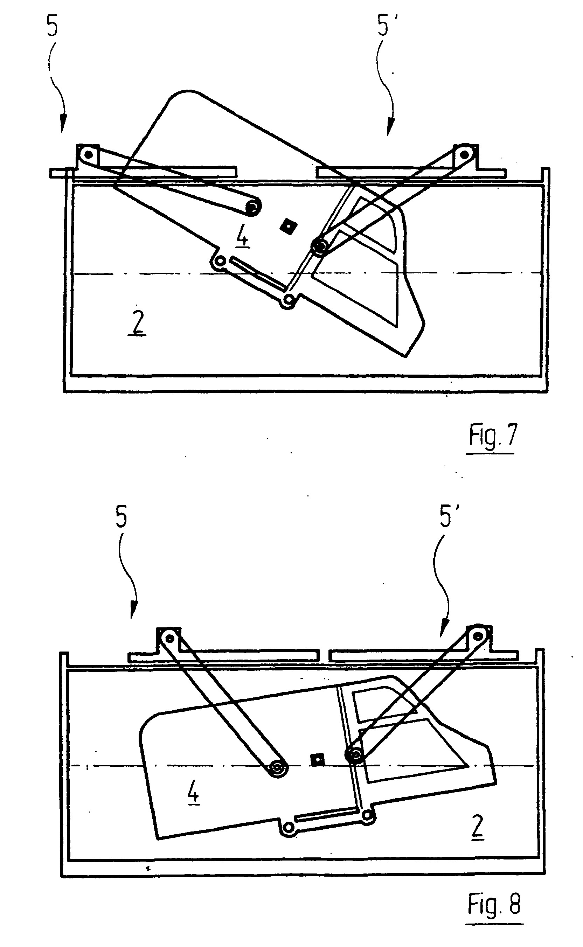

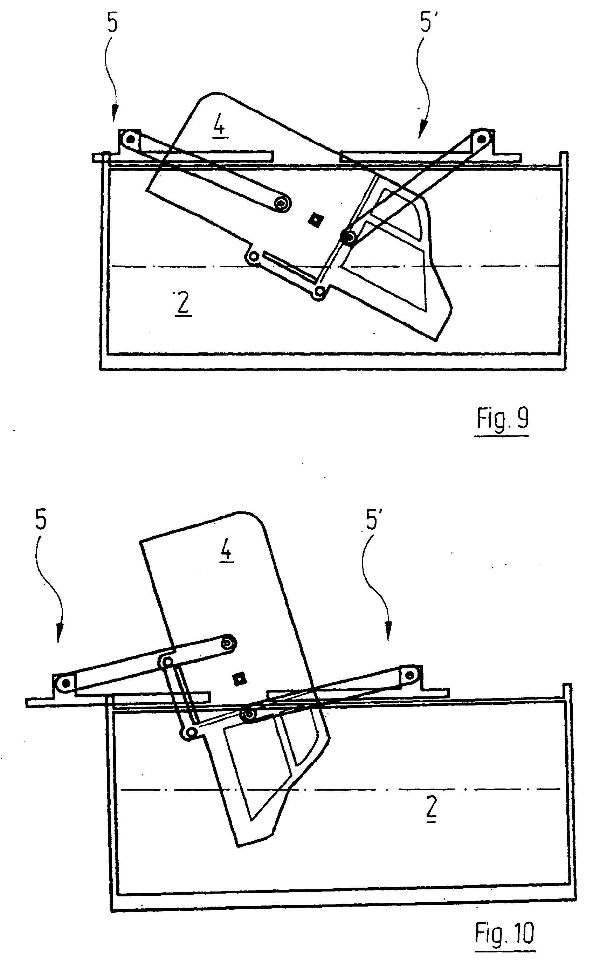

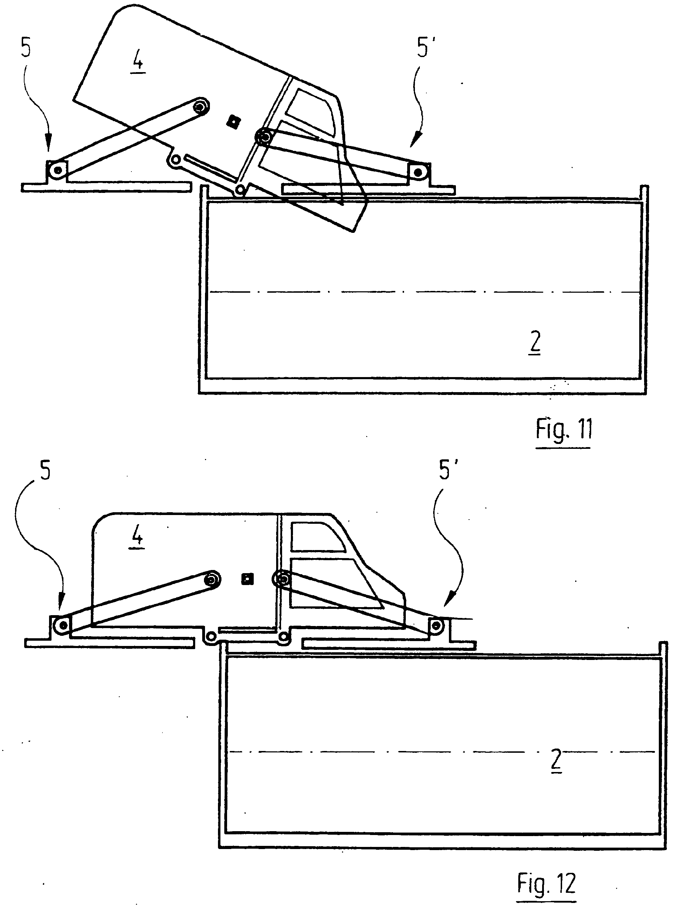

Im Bereich außerhalb der Tauchbecken 2, 2' werden beide Transportwagen 5, 5' innerhalb eines Paares synchron translatorisch bewegt. Dies erfolgt ausschließlich über den Translationsantrieb 28 des Transportwagens 5. Der Transportwagen 5 schiebt oder zieht den Transportwagen 5' über die zwischen ihnen bestehende Verbindung, die von den Schwenkarmen 50, 51, der Tragstruktur 61 und den Schwenkarmen 50', 51' gebildet wird. Dabei ist die Winkelstellung der Schwenkarme 50, 51 gegenüber den Längstraversen 7 des ersten Tragwagens 5 durch die entsprechenden Antriebe ebenso fixiert wie die Winkelstellung der Tragstruktur 61 gegenüber den Schwenkarmen 50, 51 des ersten Tragwagens 5. Hieraus ergibt sich - ohne zusätzliche Fixierung - die Position aller beweglicher Komponeneten des zweiten Transportwagens 5'. Soll nunmehr die Fahrzeugkarosserie 4 in eines der Tauchbecken 2, 2' eingetaucht werden, so können durch Bestromung der Antriebsmotoren, mit denen die Schwenkachsen 52, 53 des ersten Tragwagens 5 verdreht werden, praktisch beliebige Kinematiken einer Eintauchbewegung erzielt werden. Ein Beispiel für eine derartige Kinematik ist den Figuren 5 bis 12 zu entnehmen. Hier wird die Fahrzeugkarosserie 4 ausgehend aus der Transportposition zunächst so verschwenkt, dass sie mit dem Vorderteil nach unten in die Behandlungsflüssigkeit eingetaucht wird (Figuren 5 und 6), und dann innerhalb der Behandlungsflüssigkeit wieder im Wesentlichen horizontal gerichtet (Figuren 7 und 8). Die sich anschließende Austauchbewegung erfolgt in umgekehrter Weise. Das heißt, die Fahrzeugkarosserie wird mit ihrem Heck angehoben und mit diesem voraus aus der Behandlungsflüssigkeit ausgetaucht (Figuren 9 und 10) und sodann mit dem vorderen Bereich aus der Behandlungsflüssigkeit herausgeschwenkt (Figuren 11 und 12). Hat die Fahrzeugkarosserie 4 sodann wieder ihre normale, in Figur 12 dargestellte Transportposition erreicht, in der die Tragplattform 63 im Wesentlichen horizontal ausgerichtet ist, werden die beiden Transportwagen 5, 5' translatorisch weiter bewegt.

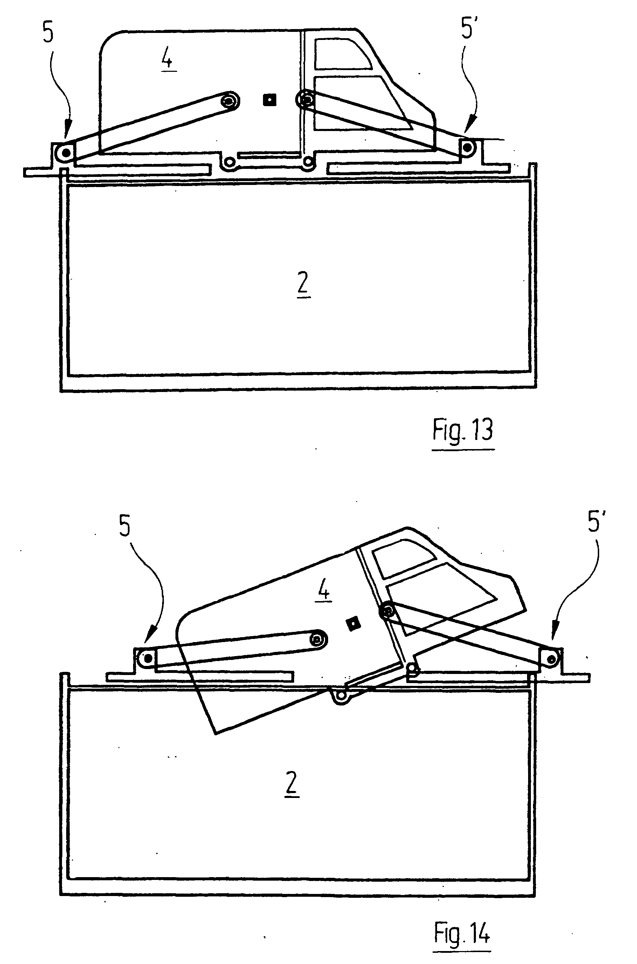

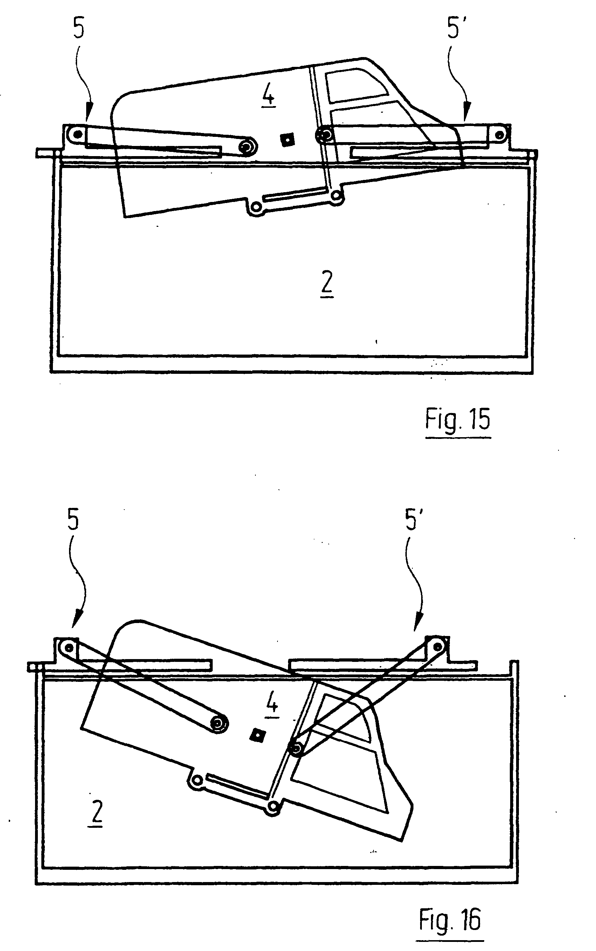

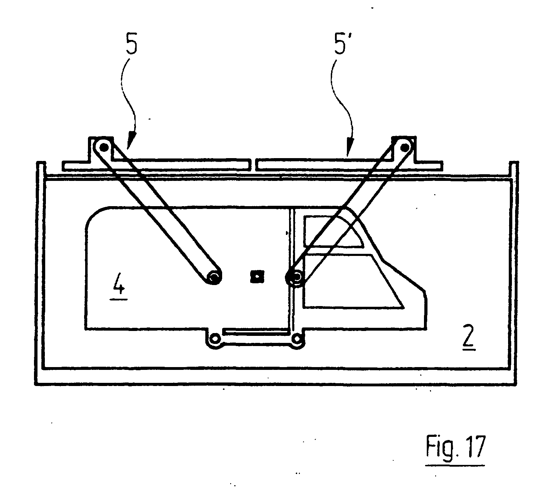

Eine zweite Möglichkeit, einen Eintauchvorgang mit den beiden Transportwagen 5, 5' zu bewirken, ist in den Figuren 13 bis 17 gezeigt. Hier wird die Fahrzeugkarosserie 4 zunächst in der normalen Transportposition bei horizontaler Ausrichtung der Tragplattform 63 über das Tauchbad 2 gefahren (Figur 13). Sodann wird das Vorderteil etwas angehoben und die Fahrzeugkarosserie 4 in schräger Neigung mit dem Heck voraus bei gleichzeitiger Rückwärtsbewegung der Tragwagen 5, 5' teilweise in die Behandlungsflüssigkeit eingetaucht (Figuren 14 und 15). Sodann wird die Schwenkrichtung umgekehrt: Nunmehr wird das Vorderteil stärker als das Heck nach unten eingetaucht (Figur 16), vorauf sich wieder eine stärkere Eintauchbewegung des Hecks anschließt, bis, wie in Figur 17 gezeigt, die Fahrzeugkarosserie 4 auf einer im Wesentlichen horizontal stehenden Tragplattform vollständig in die Behandlungsflüssigkeit eingetaucht ist. Die Austauchbewegung erfolgt dann rückwärts in umgekehrter Reihenfolge, sodass auf deren Beschreibung verzichtet werden kann. Befindet sich die Fahrzeugkarosserie 4 wieder in ihrer normalen Transportposition, kann das Paar von Transportwagen 5, 5' in horizontaler Richtung weiterfahren.

Selbstverständlich lassen sich durch entsprechende Steuerung unendlich viele andere Bewegungsabläufe realisieren, die den jeweiligen Bedingungen optimal angepaßt werden können.

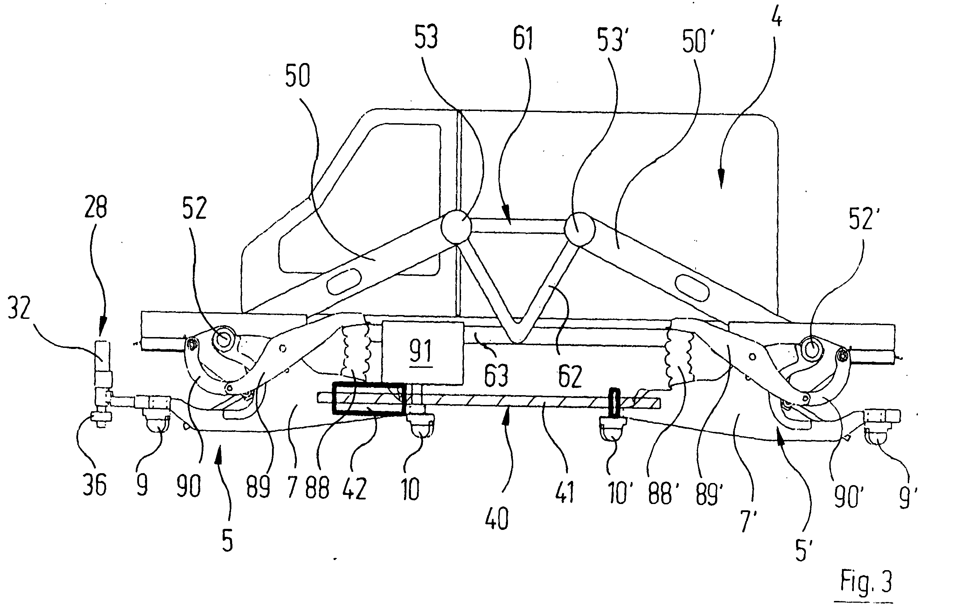

Die Betrachtung der Figuren 5 bis 17 macht deutlich, dass sich bei der Eintauchbewegung der Abstand zwischen den beiden Transportwagen 5, 5' verändert. Diese Relativverschiebung des in der Translationsbewegung nicht angetriebenen Transportwagens 5' gegenüber dem translatorisch angetriebenen Transportwagen 5 stellt sich grundsätzlich ohne besonderes Zutun ein. Unter ungünstigen Umständen und geometrischen Bedingungen können jedoch eine Selbsthemmung und/oder undefinierte Verhältnisse entstehen. Um dem vorzubeugen, ist bei dem Ausführungsbeispiel des Transportwagenpaares, das in Figur 3 dargestellt ist, ein zusätzlicher Antrieb 40 vorgesehen, mit dem sich der Abstand zwischen den beiden Transportwagen 5, 5' verändern lässt. Dieser Antrieb 40 umfasst eine Gewindespindel 41, die an dem in Figur 3 linken Transportwagen 5 verdrehbar aber axial unbeweglich gelagert ist und dort von einem Motor 42 in Drehung versetzt werden kann. Die Gewindespindel 41 erstreckt sich parallel zur Förderrichtung bis zu dem in Figur 3 rechten, translatorisch nicht selbständig angetriebenen Transportwagen 5' und verläuft dort durch eine mit diesem Transportwagen 5' starr verbundene Gewindenuss 53 hindurch. Die Anordnung ist so, dass durch Verdrehung der Gewindespindel 40 der in Figur 3 rechte Transportwagen 5' näher an den Transportwagen 5 herangeführt oder weiter von diesem entfernt werden kann. Die Ansteuerung des Antriebes 40 muss selbstverständlich kompatibel zu der Kinematik erfolgen, mit welcher die Schwenkarme 50, 51 bzw. 50', 51' bewegt werden. Auf diese Weise kann eine eventuell eingetretene Selbsthemmung oder eine Undefiniertheit in den Bewegungsabläufen der Schwenkarme 50, 51 bwz. 50', 51' der beiden Transportwagen 5, 5' überwunden werden.

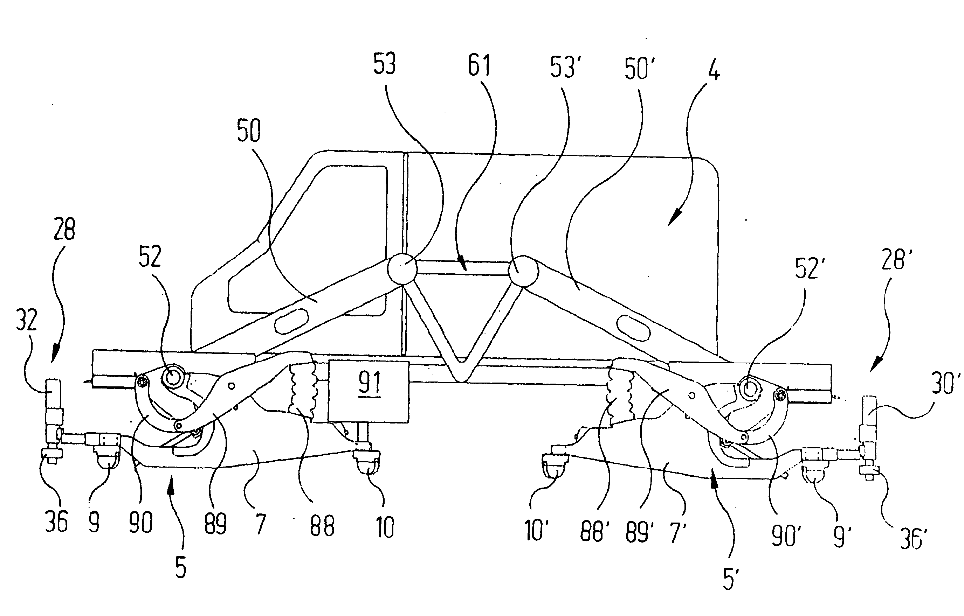

Statt des zusätzlichen Antriebes 40, der zwischen den beiden Transportwagen 5, 5' wirkt, ist es zu demselben Zweck auch möglich, den zweiten Transportwagen 5' mit einem eigenen Translationsantrieb 28' zu versehen, wie dies in Figur 4 dargestellt ist. Auch dieser Translationsantrieb 28', der in entsprechender Weise anzusteuern ist, kann eine Selbsthemmung der Bewegungsabläufe verhindern.

Es ist selbstverständlich nicht erforderlich, dass alle Antriebe an demselben Transportwagen 5 vorgesehen sind, wie dies bei den Ausführungsbeispielen der Figuren 2 und 3 der Fall ist. Allgemein gelten folgende Verhältnisse:

Das Gesamtsystem aus den beiden Transportwagen 5, 5' und der diese verbindende Tragstruktur 61 besitzt folgende Freiheitsgrade: Die Translationsbewegung des ersten Transportwagens 5, die Translationsbewegung des zweiten Transportwagens 5', die Schwenkung der Schwenkarme 50, 51 des ersten Transportwagens 5 um die erste Schwenkachse 52, die Schwenkung der Schwenkarme 50', 51' des zweiten Transportwagens 5' um dessen erste Schwenkachse 52', die Schwenkung der Tragstruktur 61 um die obere Schwenkachse 53 des ersten Transportwagens 5 und die Schwenkung der Tragstruktur 61 um die obere Schwenkachse 53' des zweiten Transportwagens 5'. Von diesen insgesamt sechs Freiheitsgraden müssen insgesamt drei Freiheitsgrade kontrolliert angetrieben sein; in den drei anderen Freiheitsgraden stellt sich die Position der verschiedenen Teile daraufhin automatisch ein. Allenfalls zur Überwindung von Selbsthemmungen und anderen Undefiniertheiten bei ungünstigen Verhältnissen ist es günstig, wie schon oben erwähnt, für einen vierten Freiheitsgrad einen Antrieb vorzusehen.

In welcher Weise nunmehr die Antriebe für die verschiedenen Freiheitsgrade auf die beiden Transportwagen 5, 5' verteilt sind, ist grundsätzlich unerheblich und kann nach anlagenspezifischen Gesichtspunkten frei bestimmt werden. Beispielsweise wäre es möglich, statt die obere Schwenkachse 53 des ersten Transportwagens % die obere Schwenkachse 53' des zweiten Transportwagens 5' anzutreiben, ohne die Antriebsverhältnisse im Übrigen zu ändern.

Werden die Transportwagen 5, 5' dazu benutzt, die Fahrzeugkarosserie 4 durch ein kataphoretisches Tauchbad zu führen, so kann die Verbindung zwischen einem Transportwagen 5 und der Fahrzeugkarosserie 4 dazu genutzt werden, die Fahrzeugkarosserie 4 auf Kathodenpotenzial zu legen, während der zweite Transportwagen 5' eine Hilfsanode mit Spannung versorgt, die in dem Innenraum der Fahrzeugkarosserie 4 mitgeführt wird. Auf diese Weise lässt sich das Abscheiden von Lackpigmentteilchen an den Innenflächen der Fahrzeugkarosserie 4, die sich sonst im feldlosen Bereich befinden würden, verbessern.

## Patentansprüche

1. Anlage zum Behandeln, insbesondere zum Lackieren, von Gegenständen, insbesondere von Fahrzeugkarosserien (4), mit
a) mindestens einem Behandlungsbereich, insbesondere einem eine Behandlungsflüssigkeit enthaltenden Bad (2,2'), in welchen die Gegenstände (4) eingebracht werden;
b) einer Fördereinrichtung (5, 5'), mit welcher die Gegenstände (4) in einer kontinuierlichen oder intermittierenden Translationsbewegung durch die Anlage geführt werden können und die mindestens einen Transportwagen (5, 5') umfasst, der seinerseits aufweist:
ba) ein Fahrwerk (7, 9, 10);
bb) mindestens einen Schwenkarm (50, 51), der um eine erste Schwenkachse (52) verschwenkbar mit dem Fahrwerk (79, 10) verbunden ist und mit dem um eine zweite Schwenkachse (53) verschwenkbar eine erste Stelle einer Tragstruktur (61) für den zu behandelnden Gegenstand (4) verbunden ist;
**dadurch gekennzeichnet, dass**
c) jedem Transportwagen (5) ein zweiter Transportwagen (5') zugeordnet ist, der ebenfalls umfasst:
ca) ein Fahrwerk (7', 9', 10');
cb) mindestens einen Schwenkarm (50', 51'), der um eine erste Schwenkachse (52') verschwenkbar mit dem Fahrwerk (7', 9', 10') verbunden ist und mit dem über eine zweite Schwenkachse (53') verschwenkbar eine zweite Stelle der Tragstruktur (61) verbunden ist;
derart, dass
d) das Paar aus zwei Transportwagen (5, 5') die folgenden sechs Bewegungsfreiheitsgrade aufweist:
- Translationsbewegung des ersten Transportwagens (5);
- Translationsbewegung des zweiten Transportwagens (5');
- Schwenkung des Schwenkarmes (50, 51) des ersten Transportwagens (5) um dessen erste Schwenkachse (52);
- Schwenkung des Schwenkarmes (50', 51') des zweiten Transportwagens (5') um dessen erste Schwenkachse (52');
- Schwenkung der Tragstruktur (61) um die zweite Schwenkachse (53) des ersten Transportwagens (5);
- Schwenkung der Tragstruktur (61) um die zweite Schwenkachse (53') des zweiten Transportwagens (5');
wobei
e) für mindestens drei der oben genannten Bewegungsfreiheitsgrade Antriebe vorgesehen sind, von denen mindes-tens einer ein Translationsantrieb (28, 29) ist.

2. Anlage nach Anspruch 1, **dadurch gekennzeichnet, dass**
für vier Bewegungsfreiheitsgrade Antriebe vorgesehen sind, wobei mindestens ein Antrieb von einer Steuerung (91) kompatibel zu den Antrieben der anderen Bewegungsfreiheitsgrade angesteuert wird.

3. Anlage nach Anspruch 2, **dadurch gekennzeichnet,**
**dass** beide Transportwagen (5, 5') im Paar einen Translationsantrieb (28, 28') aufweisen.

4. Anlage nach Anspruch 2, **dadurch gekennzeichnet,**
**dass** ein Transportwagen (5) im Paar einen Translationsantrieb (28) aufweist und ein Antrieb (40) vorgesehen ist, mit dem der Abstand zwischen den beiden Transportwagen (5, 5') im Paar veränderbar ist.

5. Anlage nach Anspruch 4, **dadurch gekennzeichnet,**
**dass** der den Abstand verändernde Antrieb (40) ein Spindelantrieb ist.

6. Anlage nach einem der vorhergehenden Ansprüche,
**dadurch gekennzeichnet, dass** alle Antriebe für alle Bewegungsfreiheitsgrade an einem Transportwagen (5) des Paares angeordnet sind.

7. Anlage nach einem der Ansprüche 1 bis 5, **dadurch**
**gekennzeichnet, dass** die Antriebe für die Bewegungsfreiheitsgrade auf beide Transportwagen (5, 5') verteilt sind.

8. Anlage nach einem der vorhergehenden Ansprüche,
bei welcher ein Behandlungsbereich ein Tauchbecken zur elektrophoretischen Tauchlackierung umfasst, **dadurch gekennzeichnet, dass** ein Transportwagen (5) im Paar eine Verbindung zwischen dem einen Pol einer Spannungsquelle und dem zu lackierenden Gegenstand (4) herstellt, während der andere Transportwagen (5') eine Verbindung zwischen dem entgegengesetzten Pol einer Spannungsquelle und einer im Innenraum des zu lackierenden Gegenstandes (4) mitgeführten Hilfselektrode herstellt.

## Claims

1. An installation for treating, in particular for coating, articles, especially vehicle bodies(4), having
a) at least one treatment zone, in particular a bath (2, 2') containing a treatment liquid, into which the articles (4) are introduced;
b) a conveying means (5, 5'), with which the articles (4) may be conveyed through the installation in a continuous or intermittent translational movement and which comprises at least one transport carriage (5, 5'), which in turn comprises:
ba) a running gear (7, 9, 10);
bb) at least one swivel arm (50, 51), which is connected with the running gear (7, 9, 10) so as to be swivellable about a first pivot pin (52) and with which a first point of a supporting structure (61) for the article to be treated (4) is connected so as to be swivellable about a second pivot pin (53);
**characterised in that**
c) a second transport carriage (5') is assigned to each transport carriage (5), which likewise comprises:
ca) a running gear, (7', 9', 10'),
cb) at least one swivel arm (50', 51'), which is connected with the running gear (7', 9', 10') so as to be swivellable about a first pivot pin (52') and with which a second point of the supporting structure (61) is connected so as to be swivellable about a second pivot pin (53').
in such a way that
d) the pair of two transport carriages (5, 5') comprises the following six degrees of freedom of motion:
- translational movement of first transport carriage (5);
- translational movement of second transport carriage (5');
- swivelling of swivel arm (50, 51) of first transport carriage (5) about first pivot pin (52) thereof;
- swivelling of swivel arm (50', 51') of second transport carriage (5') about first pivot axis thereof (52');
- swivelling of supporting structure (61) about second pivot pin (53) of first transport carriage (5);
- swivelling of supporting structure (61) about second pivot pin (53') of second transport carriage (5');
wherein
e) for at least three of the above-mentioned degrees of freedom of movement, drives are provided, at least one of which is a translational drive (28, 29).

2. An installation according to claim 1, **characterised in that** drives are provided for four degrees of freedom of motion, wherein at least one drive is actuated by a control means (91) which is compatible with the drives of the other degrees of freedom of motion.

3. An installation according to claim 2, **characterised in that** both transport carriages (5, 5') of a pair comprise a translational drive (28, 28').

4. An installation according to claim 2, **characterised in that** one transport carriage (5) of a pair comprises a translational drive (28) and a drive (40) is provided with which the spacing between the two transport carriages (5, 5') of the pair may be varied.

5. An installation according to claim 4, **characterised in that** the drive (40) which changes the spacing is a spindle drive.

6. An installation according to one of the preceding claims, **characterised in that** all the drives for all the degrees of freedom of motion are arranged on one transport carriage (5) of the pair.

7. An installation according to one of claims 1 to 5, **characterised in that** the drives for the degrees of freedom of motion are distributed between the two transport carriages (5, 5').

8. An installation according to one of the preceding claims, in which a treatment zone comprises a dipping tank for electrophoretic dip coating, **characterised in that** one transport carriage (5) of a pair effects a connection between the one pole of a voltage source and the article (4) to be coated, while the other transport carriage (5') effects a connection between the opposite pole of a voltage source and an auxiliary electrode carried inside the article (4) to be coated.

## Revendications

1. Installation de traitement, notamment pour la mise en peinture d'objets, en particulier des carrosseries (4) de véhicules, comprenant
a) au moins une zone de traitement, notamment un bain (2, 2') renfermant un liquide de traitement, dans laquelle les objets (4) sont introduits ;
b) un dispositif de convoyage (5, 5') par lequel les objets (4) sont guidés à travers l'installation en un mouvement translatoire continu ou intermittent, et qui présente au moins un chariot de transport (5, 5') comprenant, à son tour :
ba) un châssis de roulement (7, 9, 10) ;
bb) au moins un bras pivotant (50, 51) qui est relié audit châssis de roulement (7, 9, 10) avec faculté de pivotement autour d'un premier axe de pivotement (52) et auquel est relié, avec faculté de pivotement autour d'un second axe de pivotement (53), un premier emplacement d'une structure de support (61) affectée à l'objet (4) devant être traité ;
**caractérisée par** le fait
c) qu'un second chariot de transport (5'), assigné à chaque chariot de transport (5), comprend semblablement :
ca) un châssis de roulement (7', 9', 10');
cb) au moins un bras pivotant (50', 51') qui est relié audit châssis de roulement (7', 9', 10') avec faculté de pivotement autour d'un premier axe de pivotement (52') et auquel est relié, avec faculté de pivotement autour d'un second axe de pivotement (53'), un second emplacement de la structure de support (61) ;
de façon telle que
d) la paire comprenant deux chariots de transport (5, 5') possède les six degrés de liberté de mouvement suivants :
- mouvement translatoire du premier chariot de transport (5) ;
- mouvement translatoire du second chariot de transport (5') ;
- pivotement du bras pivotant (50, 51) du premier chariot de transport (5) autour du premier axe de pivotement (52) de ce dernier ;
- pivotement du bras pivotant (50', 51') du second chariot de transport (5') autour du premier axe de pivotement (52') de ce dernier ;
- pivotement de la structure de support (61) autour du second axe de pivotement (53) du premier chariot de transport (5) ;
- pivotement de la structure de support (61) autour du second axe de pivotement (53') du second chariot de transport (5') ;
sachant
e) que sont prévus, pour au moins trois des degrés de liberté de mouvement précités, des entraînements dont au moins l'un est un entraînement (28, 29) en translation.

2. Installation selon la revendication 1, **caractérisée par le fait que** des entraînements sont prévus pour quatre degrés de liberté de mouvement, au moins un entraînement étant activé, par une commande (91), de manière compatible avec les entraînements des autres degrés de liberté de mouvement.

3. Installation selon la revendication 2, **caractérisée par le fait que** les deux chariots de transport (5, 5'), compris dans la paire, comportent un entraînement (28, 28') en translation.

4. Installation selon la revendication 2, **caractérisée par le fait qu'**un chariot de transport (5) compris dans la paire comporte un entraînement (28) en translation, et il est prévu un entraînement (40) permettant de faire varier l'espacement entre les deux chariots de transport (5, 5') compris dans la paire.

5. Installation selon la revendication 4, **caractérisée par le fait que** l'entraînement (40), faisant varier l'espacement, est un entraînement par broche.

6. Installation selon l'une des revendications précédentes, **caractérisée par le fait que** tous les entraînements affectés à tous les degrés de liberté de mouvement sont disposés sur un chariot de transport (5) de la paire.

7. Installation selon l'une des revendications 1 à 5, **caractérisée par le fait que** les entraînements affectés aux degrés de liberté de mouvement sont répartis sur les deux chariots de transport (5, 5').

8. Installation selon l'une des revendications précédentes, dans laquelle une zone de traitement englobe une cuve d'immersion en vue du laquage par immersion électrophorétique, **caractérisée par le fait qu'**un chariot de transport (5), compris dans la paire, établit une liaison entre l'un des pôles d'une source de tension et l'objet (4) devant être laqué, tandis que l'autre chariot de transport (5') établit une liaison entre le pôle opposé d'une source de tension, et une électrode auxiliaire guidée conjointement dans l'espace interne dudit objet (4) devant être laqué.
